(19) **Europäisches Patentamt**

**European Patent Office**

**Office européen des brevets**

(11) **EP 1 699 190 A1**

(12) **EUROPEAN PATENT APPLICATION**

(43) Date of publication:
**06.09.2006 Bulletin 2006/36**

(51) Int Cl.:
***H04L 12/56*** *(2006.01)*

(21) Application number: **06250701.7**

(22) Date of filing: **09.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.02.2005 GB 0502783**

(71) Applicant: **THE UNIVERSITY COURT OF THE UNIVERSITY OF EDINBURGH Edinburgh EH8 9YL (GB)**

(72) Inventors:
 • **McLaughlin, Stephen Edinburgh EH15 2Qs (GB)**
 • **Laurenson, David Irvine Scottish Borders EH45 8EG (GB)**
 • **Tan, Yow-Yiong Edwin Glasgow G3 8NQ (GB)**

(74) Representative: **Hanson, William Bennett et al Bromhead Johnson, Kingsbourne House, 229-231 High Holborn London WC1V 7DP (GB)**

(54) **Route selection in a mobile ad-hoc network**

(57) A method of assessing a communication route comprising a plurality of links between nodes in a mobile ad-hoc network comprises calculating the two-hop residual bandwidth of each node *I* of the route as

$$B_I(t) = B - \frac{\sum_{J \in N(I)} B(J)}{\phi}$$

where *B* is the raw channel bandwidth, the summation is the overall consumed bandwidth from node *I*'s two-hop neighborhood nodes $J \in N(I)$, and φ is a factor to account for protocol overhead, which may include handshaking, packet collision, re-transmission and/ or back-off scheme traffic. An estimated transmission time for each of a plurality of links between said nodes may be calculated taking said two-hop residual bandwidth into account. For each possible route, a route efficiency function is determined at least by summing the estimated transmission times for all the links in the route, and the route in which the value of the route efficiency function is smallest is selected.

Fig. 1

**Description**

**Background to the Invention**

This invention relates to a method of assessing a route for communication in a mobile ad-hoc network and to a transceiver for performing the method.

A multi-hop mobile radio network, also called mobile ad hoc network (MANET) is a self-organizing and rapidly deployable network in which neither a wired backbone nor a centralized control exists. The network stations with limited effective range communicate with distant stations through multi-hop paths using intermediate stations as the routers. MANETs should be capable of handling diverse multimedia applications (voice, video and data), which often have stringent Quality-of-Service (QoS) requirements. In order to provide quality delivery to delay sensitive applications, it is imperative that MANETs can provide QoS in terms of bandwidth and delay. This poses research challenges because of the dynamic irregular topologies, lack of centralized control and wireless channel properties (fading, multipath effects, time variation, etc).

QoS routing in MANETs has been studied only recently. QoS routing requires a route that satisfies the end-to-end QoS requirement. Quality-of-service is more difficult to guarantee in a MANET than in most other types of network, because the wireless bandwidth is shared amongst adjacent stations and the network topology changes as the stations move. This requires extensive collaboration between the stations, both to establish the route and to secure the resources necessary to provide the QoS. Among the QoS routing protocols proposed so far, a CDMA/TDMA MAC layer is commonly used to eliminate the interference between different transmissions. "MAC" designates Medium Access Control and is defined by the ANSI/IEEE Std 802.11, 1999 Edition [ISO/IEC DIS 8802-11], Wireless LAN Medium Access Control (MAC) and physical layer specifications. A number of schemes have been proposed for discovering or selecting a MANET route, but most fail to consider that the supported bandwidth may be less than the bandwidth available during the route discovery, which is caused by the potential bandwidth sharing brought by the new routes. Q. Xue and A. Ganz, in "Ad hoc QoS on-demand routing (AQOR) in mobile ad hoc networks," *Journal of Parallel and Distributed Computing,* vol. 63, pp. 154-165, February 2003, address the bandwidth sharing among the neighbors in the new route. However, they do not consider the bandwidth consumption caused by interference during the residual bandwidth estimation. In addition, AQOR does not consider the underestimated bandwidth situation caused by a broken route.

**Load Balancing Techniques**

Most of the known on-demand protocols use the shortest path as their route selection metric. This leads to congestion and link breakage of some of the stations in the network. Protocols which do not consider the load conditions at the stations during the route setup phase are unable to take advantage of the less loaded stations in the network topology. Multi-path routing can overcome the above problems, providing load balancing and route failure protection by distributing traffic among a set of diverse paths. The manner in which traffic is distributed over several paths is a key issue in multi-path routing (M. R. Pearlman, Z. J. Haas, P. Sholander, and S. S. Tabrizi, "On the impact of alternate path routing for load balancing in mobile ad hoc networks" in *Proceedings of IEEE First Annual Workshop on Mobile and Ad hoc Networking and Computing (MobiHOC '00),* pp. 3-10, August 2000) and it has a significant effect on performance. L. Wang, Y, Shu, M. Dong, L. Zhang and O. W. W. Yang, "Adaptive multipath source routing in ad hoc networks", in *Proceedings of IEEE International Conference on Communications (ICC '01),* vol. 3, pp. 867 - 871, June 2001 proposed a heuristic equation to balance the traffic load based on an intuitive assumption. D. Bertsekas and R. Gallager, in *Data Networks,* Prentice Hall, 1986, pp. 374 - 403 analyzed theoretically the characterization of optimal routing, and gave an example of a network with two paths. But their analysis did not consider cross-traffic when solving the load-balancing problem. Unfortunately, bandwidth utilization is very sensitive to cross-traffic in ad hoc network using Multipath Source Routing (MSR) (Wang et al., *supra).* Therefore, L. Zhang, Z. Zhao, Y. Shu, L. Wang and O. W. W. Yang, "Load balancing of multipath source routing in ad hoc networks," in *Proceedings of IEEE International Conference on Communications (ICC' 02),* vol. 5, pp. 3197-3201, May 2002 built an analytical model that would consider cross-traffic in order to explain the load-balancing problem in theory.

**Summary of the Invention**

It is an aim of the invention to provide protocols for MANETs which efficiently handle several inherent characteristics of the network:

**Dynamic topology:** The mobility of stations leads to an unpredictable network topology. Each station can change position in a random manner.

**Variable capacity wireless links:** Wireless links are bandwidth-constrained. They may vary widely in their delivery rates; some links are asymmetric; and link delivery rates can vary quickly.

**De-Centralization:** There is no centralized control in the network and thus network resources cannot be assigned in a pre-determined way.

**Radio Channel Properties:** The channel is wireless, so it will suffer fading, multipath effects, time variation, etc.

The present invention provides a method of assessing a communication route comprising a plurality of links between nodes in a mobile ad-hoc network, the method comprising calculating the two-hop residual bandwidth of each node I of the route as

$$B_I(t) = B - \frac{\sum_{J \in N(I)} B(J)}{\phi}$$

where B is the raw channel bandwidth, the summation is the overall consumed bandwidth from node I's two-hop neighborhood nodes, $J \in N(I)$ and $\phi$ is a factor to account for protocol overhead.

The nodes comprise stations, in particular mobile stations, which form the MANET.

Preferred or optional features of the method of the invention are defined in the dependent claims and include steps of selecting a route based on the assessment made. A further aspect of the invention provides a transceiver adapted to perform the method of the invention.

Since we do not make any specific assumptions ensuring a reliable path in MANETs, the present invention supports soft QoS without hard guarantees. Soft QoS means that there may exist transient time periods when the required QoS is not met due to path breakage or network partition. However, the required QoS should be met when the established routing path(s) remain unbroken. Many multimedia applications accept soft QoS and use adaptation techniques to reduce the level of QoS disruption. For instance, the QoS disruption caused by rerouting in MANET can be mitigated by using rate-adaptive, layer-based encode voice/video compression schemes. Another challenge to QoS provision is the MAC layer design. In the IEEE 802.11 WLAN Distributed Coordination Function (DCF) ad hoc mode, all the stations within a basic service set or all the flows from the same station are required to compete for the resources and channel with the same priority. Therefore, there is no support for constant bit rate, guaranteed delay, etc. Thus, our intention is to provide a mechanism that provides better than the current best-effort service for real-time video and audio applications.

## Brief Description of the Drawings

The invention will now be described in more detail, by way of example only, with reference to the accompanying drawings, in which:

Figure 1 is a flow chart showing selection of a route according to an embodiment of the invention;
Figures 2a to 2c respectively show successful packet delivery, overall throughput and average end-to-end delay for a route selected according to an embodiment of the present invention; and
Figures 3a to 3c respectively show successful packet delivery, overall throughput and average end-to-end delay for a route selected according to an alternative embodiment.

## Detailed Description of Particular Embodiments

We define Relay Bandwidth Capacity (RBC), with $RBC_I$ indicating the traffic capacity that station I can support:

$$RBC_I = c \frac{B_I(t) \min(m,n)}{n \log^3 n} \quad (bit / s) \qquad (1)$$

where, c (> 0) is a constant; $B_I(t)$ is the Two-Hop Residual Bandwidth; m and n are the number of mobile and static nodes, respectively.

Since the interference range is twice the transmission range for an IEEE 802.11 MAC equipped node, the Two-Hop Residual Bandwidth:

$$B_I(t) = B - \frac{\sum_{J \in N(I)} B(J)}{\phi} \quad (bit/s) \qquad (2)$$

where B is the raw channel bandwidth, the summation is the overall consumed bandwidth from node $I$'s two-hop neighborhood nodes, $J \in N(I)$ and $\phi$ is a factor to account for MAC's four-way handshake (RTS/CTS/ DATA/ ACK), packet collision and re-transmission, back-off scheme nature.

Bandwidth Variation, $\Delta B_I(t)$ keeps the estimated maximum change of $B_I(t)$ before the next update is implemented during the route discovery stage:

$$\Delta B_I^{new}(t) = \left[\alpha \cdot \Delta B_I^{old}(t)\right] + \left[(1-\alpha) \cdot \beta \cdot \left|B_I^{new}(t) - B_I^{old}(t)\right|\right] \qquad (3)$$

where $\alpha$ (< 1) and $\beta$ (> 1) are adjustable parameters; $\Delta B_I^{old}(t)$ and $\Delta B_I^{new}(t)$ are the values of $\Delta B_I(t)$ before and after the update, respectively and $\Delta B_I^{old}(t)$ and $B_I^{new}(t)$ are the values of $B_I(t)$ before and after the update, respectively.

Relay Bandwidth Efficiency (RBE), with $RBE_i$ is defined as the estimated time it would take to successfully transmit a packet of size L on link i:

$$RBE_i = PSP \cdot \frac{L}{B_I(t)} \qquad (s) \qquad (4)$$

where, *PSP* is the Packet Success Probability; L is the packet size (bytes) and $B_I(t)$ is the Two-Hop Residual Bandwidth.

$$PSP = \left[1 - P_{e\_data}(L)\right] \cdot \left[1 - P_{e\_ack}\right] \qquad (5)$$

where $P_{e\_data}(L)$ and *Pe_ack* are the error probabilities for an L-byte long data frame and an ACK frame, respectively. *PSP* is obtained by declaring a packet successful if the start sequence (2 bytes) is correctly received, and if there is at most a single-bit-error in each of the succeeding bytes.

**Route Selection Heuristic**

Our Conditional Maximum Relay Bandwidth Capacity (CMRBC) mechanism is based on $RBC_1$ and $RBE_i$ for an n-hop path in a total of *1* channels system. In the CMRBC, we define the route capacity function of the route $r_j$ as:

$$\xi(r_j) = \min_{\forall n_i \in r_j} RBC_I \qquad (r_j \in r^*) \qquad (6)$$

where, $r^*$ *is* the set of all possible routes between a given source node and a given destination node, $n_s$ and $n_d$ respectively. The bottleneck RBC in each path must satisfy the following requirement:

$$\xi(r_j) \geq T_{reqbandwidth} \qquad (\forall r_j \in r^{**} \in r^*) \qquad (7)$$

where $T_{reqbandwidth}$ indicates the traffic requested bandwidth that is encapsulated within the route request packet.

The weighted route efficiency function is calculated as:

$$\eta(r_j) = \left[(1-\sigma)\cdot\sum_{i=1}^{n} RBE_i\right] + \left[\sigma\cdot\max_{1\leq k\leq l} X_k\right] \qquad (\forall r_j \in r^{**} \in r^*) \qquad (8)$$

where $\sigma$ ($0 < \sigma < 1$) is a tunable factor and $X_k$ is the total of transmission times of hops on channel k.

The optimal route $r_{opt}$ is the one that satisfies the following condition:

$$\eta(r_{opt}) = \min_{\forall r_j \in r^{**}} \eta(r_j) \qquad (9)$$

If $r^{**}$ = NULL, elect the route with:

$$\xi(r_{opt}) = \max_{\forall r_j \in r^{**}} \xi(r_j) \qquad (10)$$

**Implementation of CMRBC**

**a. Route Setup**

The "HELLO" packet used in Ad Hoc On Demand Distance Vector Routing (AODV) is described by C. E. Perkins and E. M. Royer, "Ad-hoc on-demand distance vector routing", in *Proceedings of Second IEEE Workshop on Mobile Computing Systems and Applications (WMCSA '99)*, pp. 90-100, February 1999. We modify this packet to disseminate the two-hop residual bandwidth information from the neighboring stations/nodes. Our CMRBC "HELLO" packet includes two fields: (i) <station address, consumed bandwidth, timestamp> (ii) <neighbors' addresses, consumed bandwidth, timestamp>. Each station determines its consumed bandwidth by monitoring the packets it feeds into the network and the results are recorded in a bandwidth consumption register periodically. Upon receiving a CMRBC "HELLO" packet from its neighbors, it determines whether to update the bandwidth consumption register by examining the packet's timestamp. The bandwidth information is then entered into a two-hop cache table and will be extracted whenever the RBC and RBE metrics are computed.

**b. Route Discovery**

The invention supports two alternative types of control methods:

**Adaptive Control:** During the call setup period, the application will provide i) minimum bandwidth required (LBW) and ii) maximum bandwidth desired *(HBW)*. The bandwidth window *[LBW, HBW]* is referred as Flow Bandwidth Window *(FBW)*. The application can adjust its coding rate to the feedback received from the network. When a new route request with certain FBW is received <Control-flag, FBW, RREQ header>, the intermediate nodes will consult the two-hop cache table and perform the following procedures:
If $LBW \leq B_l(t)-\Delta B_l(t)$, it forwards the request.

If $B_l(t) - \Delta B_l(t) < LBW \leq B_l(t) + \Delta B_l(t)$, it updates the LBW field using the current two-hop residual bandwidth value.

If $LBW > B_l(t) + \Delta B_l(t)$, it discards the request.

**Admission Control:** In this method, the application indicates the required bandwidth (REQBW) that must be guaranteed in the request packet, <Control-flag, REQBW, RREQ header>.

If $REQBW \leq B_l(t) - \Delta B_l(t)$, it forwards the request.

If $B_l(t) - \Delta B_l(t) < REQBW \leq B_l(t) + \Delta B_l(t)$, it discards the request.

If $REQBW > B_l(t) + \Delta B_l(t)$, it discards the request.

**Route Selection**

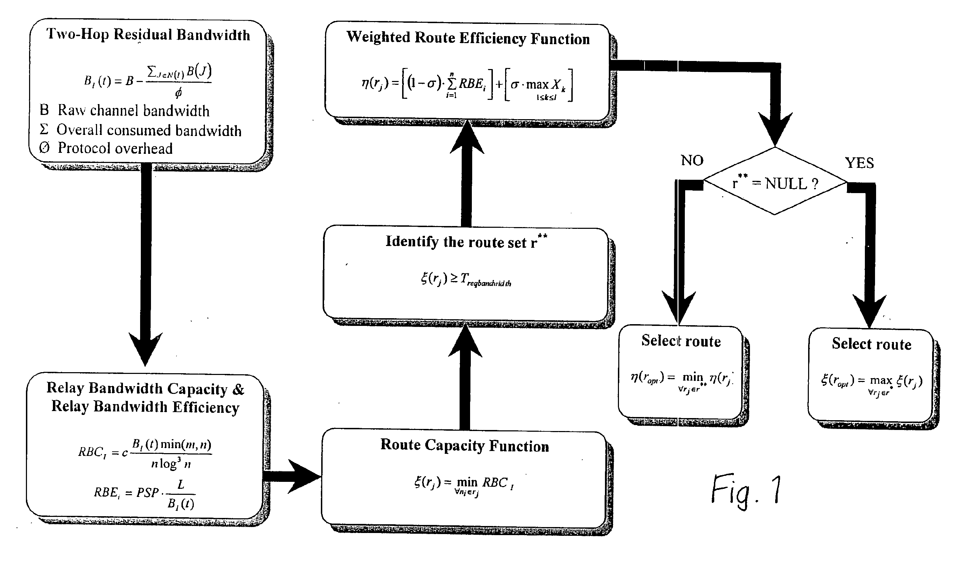

Figure 1 shows the determination of the route capacity function $\zeta(r_j)$ and the weighted route efficiency function $\eta(r_j)$ for all usable routes and the selection of a route based on one of these functions. Firstly, the two-hop residual bandwidth, then the relay bandwidth capacity and the relay bandwidth efficiency are determined for all nodes in a given route. In the next step, the route capacity function for the route is found. Next the route set $r^{**}$, i.e. the set of routes satisfying equation (7) above is identified. For each of these routes the weighted route efficiency function $\eta(r_j)$ is calculated. Finally, if r** is an empty set, the route to be followed is selected using equation (10) above; otherwise equation (9) is used to select the route.

**Localized Route Maintenance (LRM)**

Unlike existing global route maintenance schemes (to repair broken paths due to station migration, signal interference or power outages), where the station/ node that detects the failure returns an error message to the source so that it can invoke a new route discovery procedure, we implement a Localized Route Maintenance (LRM) to reduce the wastage of scare bandwidth and long delays caused by costly network flooding. Here, the immediate upstream station/ node which is on route to the moved station: (i) stores the data packet in a LRM buffer, and (ii) broadcasts a Two-Hop LRM request packet <FBW, TTL, ERROR header>, which specifies the flow bandwidth window requirement of the traffic and TTL field for a two hop request region to all its neighboring stations. A station/node receiving the LRM packet sends back an LRM reply packet if adaptive or admission control conditions are satisfied and if it has an alternative route to the destination. The upstream station then (iii) retrieve the data packet from the LRM buffer and forwards it through the repaired route or (iv) if no LRM reply is received after the expiry of the LRM repair timer, the error message is propagated back to the source and a global route maintenance is initiated.

**Performance Evaluation**

The metrics used to evaluate the performance of adaptive and admission control schemes within CMRBC are successful packet delivery, overall throughput and average end-to-end delay.

**Successful Packet Delivery:** The ratio between the number of packets originated by the "application layer" constant-bit-rate (CBR) sources and the number of packets received by the CBR sink at the final destination.

**Overall Throughput:** The amount of data transferred from the source to destination in a specified amount of time. We measured overall throughput in Mbps.

**Average End-to-End Delay:** All delays experienced by each packet, including queuing delays, route discovery delays, retransmission delays at the MAC, propagation delays and transfer times. The units are seconds.

The simulation environment consists of 50 stations distributed randomly over an area of 800m x 800m. All stations/nodes have the same transmission range and are homogeneous in terms of memory capacity, power and computation capabilities. The mobility model in our simulation is the "random way point model" (C. Bettstetter, G. Resta and P. Santi, "The node distribution of the random waypoint mobility model for wireless ad hoc networks," *IEEE Transactions on Mobile Computing*, vol. 2, pp. 257-269, July 2003). Each station/node begins by remaining stationary for pause time seconds. It then selects a random destination in the 800m x 800m space and moves to that destination at a speed distributed uniformly between 0 and some maximum speed (10 m/s). Upon reaching the destination, the station/ node pauses again for pause time seconds, selects another destination, and proceeds there as previously described, repeating this behavior for the duration of the simulation (Simulation Time - 900 seconds). Five stations are randomly chosen as sources and five stations are randomly chosen as destinations. All sources feed the same data rate to their destinations, and the feeding rate varies from 0.1Mbps to 0.8 Mbps. The sources begin to send data into the multi-hop network, one source after another, at 10-second intervals. AODV (C. E. Perkins, E. Belding-Royer, and S. Das, "Ad Hoc On Demand Distance Vector Routing (AODV)." Internet Draft - Request for Comments (RFC 3561), July 2003) is compared with the CMRBC mechanism of the present invention. The IEEE 802.11a and 802.11b MACs provide a physical-layer multi-rate capability where higher data rates (2 Mbps) are possible when signal-to-noise ratio (SNR) is sufficiently high such that channel-resiliency demands of error correcting codes and modulation schemes can be relaxed. Consequently, with IEEE 802.11a the set of possible data rates is 6, 9, 12, 18, ..., 54 Mbps whereas for IEEE 802.11b the set of possible data rates is 1, 2, 5.5 and 11 Mbps. Here, we adopted the Opportunistic Media Access (OAR) described by B. Sadeghi, V. Kanodia, A. Sabharwal and E. Knightly, "Opportunistic Media Access for Multirate Ad Hoc Networks," in *Proceedings of the 8th Annual International Conference on Mobile Computing and Networking,* pp. 24 - 35, September 2002 to opportunistically send multiple back-to-back data packets whenever the channel quality is good. We used the IEEE 802.11b in RTS/CTS/DATA/ACK mode with a raw channel bandwidth of 1, 2, 5.5 and 11 Mbps as the MAC strategy.

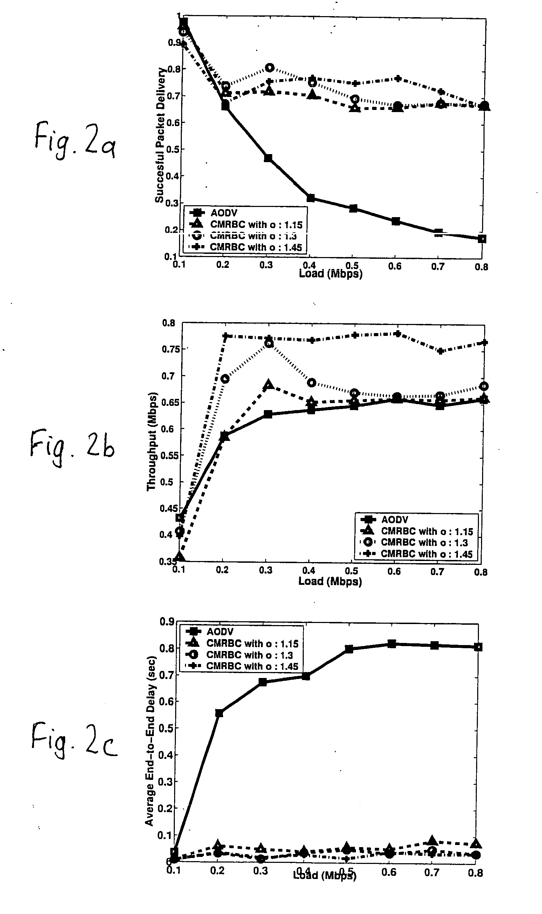

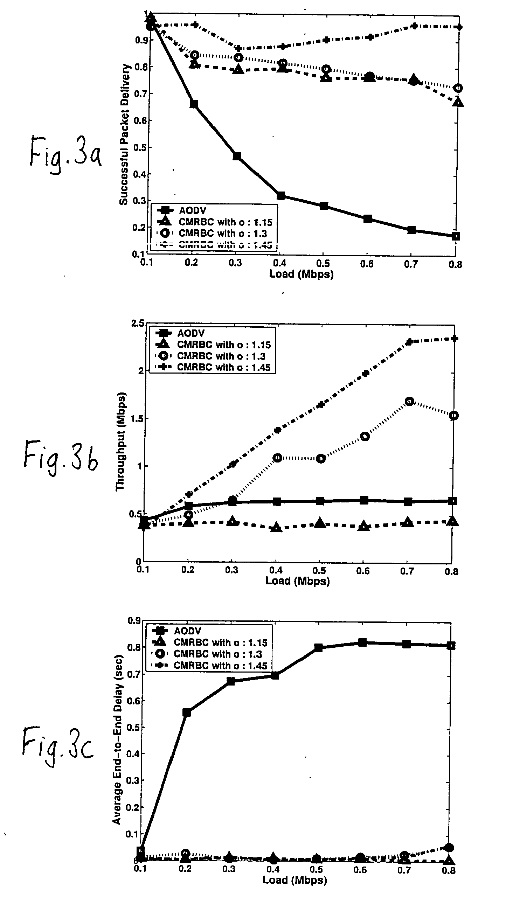

Figures 2a to 2c show the performance of CMRBC with the adaptive control scheme compared with AODV. Figures 3a to 3c show the performance of CMRBC with the admission control scheme, also compared with AODV. Figures 2a and 3a show that CMRBC outperforms AODV in successful packet delivery for the adaptive and admission schemes (by a factor of up to 3.8) in a highly congested network. In the admission scheme, each station/node rejects the request if it does not have sufficient resources to satisfy the minimum requirements of the flow *(LBW).* This results in the total capacity of the admitted flows to be less than that of the adaptive scheme, allowing reduced packet collision. Thus, we would expect the successful packet delivery for the admission scheme to be higher than for adaptive control. From the results, we can see that delivery rate increases with increasing $\phi$ factor. This is because in equation (2), the factor is used as a denominator and the bigger the factor, the more conservative the two-hop residual bandwidth derived at each station. Therefore, there is a tradeoff between the bandwidth usage and successful packet delivery. Figures 2b and 3b depict the overall throughput achievable for CMRBC compared with AODV. However, the throughput decreases by 8% when the feeding rate is low, even when the $\phi$ factor is small. The reason is that the cache table underestimates the residual bandwidth when the route breaks, and the bandwidth cannot be fully used by other flows causing a lower throughput than using AODV. This underestimated bandwidth can be used for high loads, resulting in bandwidth improvement when an appropriate $\phi$ factor is used. Finally, in Figures 2c and 3c, the average delay encountered by each data packet is illustrated. Delay is decreased (by a factor of up to 8.0) due to the avoidance of congestion and the nature of the control inherited in CMRBC. Both a shorter wait in the packet queue and less contention for the channel have contributed to this improvement.

It will be appreciated that the Conditional Maximum Relay Bandwidth Capacity (CMRBC) of the invention includes the following features: (i) bandwidth availability and link transmission time measurements in a shared unsynchronised wireless environment, (ii) distributed route selection algorithm, (iii) resource reservation that guarantees the available resources and (iv) fast and efficient route recovery. We focus on soft QoS support without hard guarantees and assume combinatorial stability i.e. that, given a specific time window, the topology changes occur sufficiently slowly to allow successful propagation of all topology updates as necessary

Existing reactive or proactive routing protocols can be modified to incorporate the CMRBC to function as the underlying route discovery and maintenance methods.

All forms of the verb "to comprise" used in this specification should be understood as forms of the verbs "to consist of" and/or "to include".

**Claims**

1. A method of assessing a communication route comprising a plurality of links between nodes in a mobile ad-hoc network, the method comprising calculating the two-hop residual bandwidth of each node *I* of the route as

$$B_I(t) = B - \frac{\sum_{J \in N(I)} B(J)}{\phi}$$

where B is the raw channel bandwidth, the summation is the overall consumed bandwidth from node I's two-hop neighborhood nodes, $J \in N(I)$ and $\phi$ is a factor to account for protocol overhead.

2. A method according to claim 1, wherein said protocol overhead includes at least one of handshaking, packet collision, re-transmission and back-off scheme traffic.

**3.** A method according to claim 1 or 2, comprising the further steps of:

> a. calculating a function giving an estimated transmission time for each of a plurality of links between said nodes taking said two-hop residual bandwidth into account,
> b. for each possible route, determining a route efficiency function at least by summing the estimated transmission times for all the links in the route, and
> c. selecting the route in which the value of the route efficiency function is smallest.

**4.** A method according to claim 3, wherein step (a) comprises estimating the transmission time for a packet of given size on each of said links.

**5.** A method according to claim 4, wherein the transmission time $RBE_i$ for said packet on a link I is calculated as:

$$RBE_i = PSP \cdot \frac{L}{B_I(t)}$$

where $PSP$ is the Packet Success Probability, L is the packet size and $B_I(t)$ is the two-hop residual bandwidth.

**6.** A method according to claim 3, 4 or 5, wherein step (b) comprises determining the maximum of the transmission times of all possible channels along the route and the route efficiency function also depends on said maximum of the transmission times.

**7.** A method according to claim 6, wherein the route efficiency function is weighted between the estimated transmission times for all the links in the route and said maximum of the transmission times of all possible channels along the route.

**8.** A method according to claim 1 or 2, the method comprising the further steps of:

> p. determining a traffic capacity for each of said nodes, depending on said two-hop residual bandwidth;
> q. for each possible route, determining a route capacity function, namely the lowest traffic capacity of any node of the route, and
> r. selecting the route with the highest route capacity function.

**9.** A method according to claim 8, wherein in step (p) the traffic capacity of a node I is determined as

$$RBC_I = c \frac{B_I(t) \min(m,n)}{n \log^3 n}$$

where, c (> 0) is a constant; $B_I(t)$ is the two-hop residual bandwidth and m and n are the number of mobile and static nodes, respectively.

**10.** A method according to claim 1 or 2, comprising the further steps of:

> w. determining a traffic capacity for each of said nodes, depending on said two-hop residual bandwidth;
> x. for each possible route, determining a route capacity function, namely the lowest traffic capacity of any node of the route,
> y. if a set of routes exists for which the route capacity function of each route in the set is at least equal to a minimum value required by the data to be transmitted, selecting from said set the route with the smallest route efficiency function, said route efficiency function being calculated at least by summing estimated transmission times for all the links in the route; and
> z. if the route capacity function of all possible routes is less than said minimum value, selecting the route with the highest route capacity function.

**11.** A method according to any one of the preceding claims, comprising a step of discovering possible routes by checking that the minimum bandwidth required for the data to be communicated is less than the two-hop residual bandwidth of each node in a candidate route.

**12.** A method according to claim 11, wherein said step of discovering possible routes includes checking that said minimum bandwidth required is less than the lowest value to which the two-hop residual bandwidth can fall when next updated.

**13.** A method according to claim 12; wherein said lowest value is calculated as

$$B_I(t) - \Delta B_I(t)$$

where

$$\Delta B_I^{new}(t) = \left[\alpha \cdot \Delta B_I^{old}(t)\right] + \left[(1-\alpha) \cdot \beta \cdot \left|B_I^{new}(t) - B_I^{old}(t)\right|\right]$$

$\alpha$ (< 1) and $\beta$ (> 1) are adjustable parameters; $\Delta B_I^{old}(t)$ and $\Delta B_I^{new}(t)$ are the values of $\Delta B_I(t)$ before and after updating, respectively and $B_I^{old}(t)$ and $)B_I^{new}(t$ are the values of $B_I(t)$ before and after updating, respectively.

**14.** A method according to claim 12 or 13, wherein, if said minimum bandwidth required is greater than said lowest value to which said two-hop residual bandwidth can fall, a candidate route through the node is rejected.

**15.** A method according to claim 12 or 13, wherein, if said minimum bandwidth required lies between said lowest value to which said two-hop residual bandwidth can fall and the highest value to which said two-hop residual bandwidth can rise when next updated, said minimum bandwidth is updated using the current two-hop residual bandwidth of the node.

**16.** A method according to claim 15, wherein if said minimum bandwidth required is greater than said highest value to which said two-hop residual bandwidth can rise, a candidate route through said node is rejected.

**17.** A method according to claim 15 or 16, wherein said highest value is calculated as

$$B_I(t) + \Delta B_I(t)$$

where

$$\Delta B_I^{new}(t) = \left[\alpha \cdot \Delta B_I^{old}(t)\right] + \left[(1-\alpha) \cdot \beta \cdot \left|B_I^{new}(t) - B_I^{old}(t)\right|\right]$$

$\alpha$ (< 1) and $\beta$ (> 1) are adjustable parameters; $\Delta B_I^{old}(t)$ and $\Delta B_I^{new}(t)$ are the values of $\Delta B_I(t)$ before and after updating, respectively and $B_I^{old}(t)$ and $B_I^{new}(t)$ are the values of $B_I(t)$ before and after updating, respectively.

**18.** A transceiver for use in a mobile-ad hoc network, adapted to perform the method according to any one of the preceding claims.

**Two-Hop Residual Bandwidth**

$$B_l(t) = B - \frac{\sum_{J \in N(l)} B(J)}{\phi}$$

B  Raw channel bandwidth
$\Sigma$  Overall consumed bandwidth
$\emptyset$  Protocol overhead

**Weighted Route Efficiency Function**

$$\eta(r_j) = \left[(1-\sigma) \cdot \sum_{i=1}^{n} RBE_i\right] + \left[\sigma \cdot \max_{1 \le k \le l} X_k\right]$$

**Identify the route set r$^{**}$**

$$\xi(r_j) \ge T_{reqbandwidth}$$

$r^{**}$ = NULL ?

NO        YES

**Relay Bandwidth Capacity & Relay Bandwidth Efficiency**

$$RBC_l = c \frac{B_l(t) \min(m,n)}{n \log^3 n}$$

$$RBE_i = PSP \cdot \frac{L}{B_l(t)}$$

**Route Capacity Function**

$$\xi(r_j) = \min_{\forall n_i \in r_j} RBC_l$$

**Select route**

$$\eta(r_{opt}) = \min_{\forall r_j \in r^{**}} \eta(r_j)$$

**Select route**

$$\xi(r_{opt}) = \max_{\forall r_j \in r^*} \xi(r_j)$$

Fig. 1

EP 1 699 190 A1

Fig. 2a

Fig. 2b

Fig. 2c

Fig.3a

Fig.3b

Fig.3c

**European Patent Office**

**EUROPEAN SEARCH REPORT**

Application Number

EP 06 25 0701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | LEI CHEN; HEINZELMAN W B: "QoS-aware routing based on bandwidth estimation for mobile ad hoc networks" IEEE JOURNAL ON SELECTED AREAS IN COMMUNICATIONS, March 2005 (2005-03), XP002379085 * page 564, left-hand column, line 19 - line 31 * | 1,2,18 | INV. H04L12/56 |
| X | US 6 678 252 B1 (CANSEVER DERYA H) 13 January 2004 (2004-01-13) * column 4, line 10 - column 5, line 57; figure 2 * * column 8, line 30 - column 9, line 18; figure 6 * | 1-7,18 | |
| T | US 2003/161268 A1 (LARSSON PETER ET AL) 28 August 2003 (2003-08-28) * paragraph [0005] - paragraph [0041] * | 1-18 | |
| A | YING GE ET AL: "Quality of service routing in ad-hoc networks using OLSR" SYSTEM SCIENCES, 2003. PROCEEDINGS OF THE 36TH ANNUAL HAWAII INTERNATIONAL CONFERENCE ON 6-9 JAN. 2003, PISCATAWAY, NJ, USA,IEEE, 6 January 2003 (2003-01-06), pages 300-308, XP010626743 ISBN: 0-7695-1874-5 * 2. Description of OLSR * * 3. QoS metrics and network model for simulation * * 4. Integrating OLRS and QoS routing * | 1-18 | TECHNICAL FIELDS SEARCHED (IPC) H04L |

The present search report has been drawn up for all claims

| Place of search | Date of completion of the search | Examiner |
|---|---|---|
| Munich | 2 May 2006 | Lastoria, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 0701

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2006

| Patent document cited in search report | | Publication date | Patent family member(s) | | Publication date |
|---|---|---|---|---|---|
| US 6678252 | B1 | 13-01-2004 | NONE | | |
| US 2003161268 | A1 | 28-08-2003 | AU | 2002359197 A1 | 09-09-2003 |
| | | | CN | 1620787 A | 25-05-2005 |
| | | | EP | 1479197 A1 | 24-11-2004 |
| | | | JP | 2005518717 T | 23-06-2005 |
| | | | WO | 03071751 A1 | 28-08-2003 |

EPO FORM P0459

For more details about this annex : see Official Journal of the European Patent Office, No. 12/82